Europäisches Patentamt

European Patent Office

Office européen des brevets

(11) Numéro de publication: **0 281 475**
**A2**

# (12) DEMANDE DE BREVET EUROPEEN

(21) Numéro de dépôt: **88400467.2**

(22) Date de dépôt: **01.03.88**

(51) Int. Cl.⁴: **C 08 J 3/20**

(30) Priorité: **05.03.87 FR 8702987**

(43) Date de publication de la demande:
**07.09.88 Bulletin 88/36**

(84) Etats contractants désignés:
**AT BE CH DE ES FR GB GR IT LI LU NL SE**

(71) Demandeur: **ARJOMARI-PRIOUX S.A.**
**3 rue du Pont de Lodi**
**F-75006 Paris (FR)**

(72) Inventeur: **Goguelin, Michel**
**Le Guillermet**
**F-38850 Charavines (FR)**

(74) Mandataire: **Daudens, Michèle**
**Groupe ARJOMARI 3, rue du Pont de Lodi**
**F-75006 Paris (FR)**

(54) **Matériau thermoplastique renforcé et son procédé de fabrication.**

(57) Un matériau thermoplastique renforcé est réalisé selon un procédé humide à partir d'une suspension aqueuse de fibres de renforcement et d'une poudre obtenue par broyage de granulés composés d'au moins une résine thermoplastique et d'au moins un adjuvant. Le matériau est destiné à être transformé par moulage, moulage-estampage ou thermoformage.

EP 0 281 475 A2

# Description

## MATERIAU THERMOPLASTIQUE RENFORCE ET SON PROCEDE DE FABRICATION

La présente invention concerne un matériau thermoplastique renforcé, réalisé à partir d'une suspension aqueuse de fibres de renforcement et destiné à être transformé par moulage, moulage-estampage ou thermoformage.

On connaît déjà des matériaux en feuille comportant des fibres de renforcement, et une résine thermoplastique en poudre, ces matériaux étant transformables notamment par moulage-estampage ou thermoformage, en un produit fini.

Les documents EP-A-39 292 (ARJOMARI) et EP-A-71219 (DOW) décrivent un procédé de préparation de tels matériaux par la technique papetière. Selon ce procédé, on forme une suspension dans de l'eau des fibres de renforcement, de la résine thermoplastique et de certains adjuvants, on dépose sur une toile la suspension, on essore la suspension pour obtenir une feuille humide que l'on sèche ensuite pour obtenir le matériau en feuille. Selon ce procédé on doit ajouter dans la suspension aqueuse un liant et un floculant pour assurer la cohésion de la feuille, c'est-à-dire la liaison entre les fibres et la résine, et pour obtenir une bonne rétention particulièrement des adjuvants. Ces adjuvants tels que pigments, stabilisants, sont nécessaires pour conférer au produit fini certaines caractéristiques physiques, pour en assurer sa conservation ou pour faciliter sa fabrication.

Ces adjuvants, bien connus de l'Homme de l'Art, sont très souvent solides à la température ambiante. Il est nécessaire de les introduire à très faible dose dans la suspension aqueuse et de ce fait, ils sont mélangés sous forme de très fines particules avec la résine thermoplastique vierge, avant formation de la feuille, pour obtenir une combinaison intime et homogene avec la résine dans le produit fini.

Mais du fait que ces adjuvants ont une taille particulaire très faible, inférieure à la taille des mailles de la toile sur laquelle on dépose la suspension, ils ont tendance à passer à travers les mailles lorsqu'on effectue l'essorage soit par gravitation, soit par aspiration, et ce particulièrement si la suspension ne présente ni liant, ni floculant. L'eau qui est essorée contient alors des quantités non négligeables des adjuvants qui ne se retrouvent donc pas dans la feuille essorée.

Les rétention des adjuvants particulaires de faible diamètre est donc mauvaise.

D'autre part, certains adjuvants existent sous forme liquide et étant organiques, ne sont pas miscibles dans l'eau : leur mise en oeuvre par voie humide est donc, si ce n'est impossible, du moins très difficile sans l'aide d'artifices matériels coûteux. Or, pour des impératifs économiques, il est constamment recherché un abaissement du coût de fabrication à qualité égale.

Un but de l'invention est donc d'obtenir par voie humide un matériau thermoplastique renforcé qui par transformation donne un produit contenant ou présentant les effets d'adjuvants non miscibles à l'eau.

Un but de l'invention est donc de résoudre le problème de rétention des adjuvants particulaires contenus dans la suspension aqueuse déposée sur la toile lors de l'essorage de cette suspension.

Un autre but de l'invention est de supprimer l'introduction du liant et du floculant.

On connaît, par ailleurs, des procédés pour mélanger des matériaux thermoplastiques et des charges solides. Les procédés sont décrits dans les documents US-A-3997 494 et US-A-4 045 403 (GENERAL ELECTRIC). Ils consistent à chauffer progressivement des particules de matériau thermoplastique avec la charge, tout en agitant le mélange.

L'invention est donc de proposer un procédé de fabrication et une composition particulière résolvant les problèmes de rétention précités et ne nécessitant plus l'introduction de liant ni de floculant. Par "floculant", il faut entendre tout agent ou système ionique, modifiant dans le mélange aqueux la charge de surface d'au moins l'un des constituants, en l'inversant ou en le neutralisant, de manière à permettre sa rétention par floculation ou association avec un ou plusieurs autres constituants du matériau.

Le procédé de l'invention est un procédé humide du type comprenant les étapes de formation d'une suspension aqueuse contenant les fibres de renforcement, au moins une résine thermoplastique et au moins un adjuvant, puis l'essorage de la suspension sur la toile d'une forme.

Selon l'invention, la résine et l'adjuvant sont intimement mélangés dans les grains d'une poudre de granulométrie supérieure au vide de maille de la toile, laquelle poudre est introduite dans ladite suspension.

Préférentiellement, la forme est une table plate du type Fourdrinier pour la mise en oeuvre d'un procédé papetier.

Par "intimement mélangés", on entend que les grains de poudre sont constitués du mélange homogène de la résine et de l'adjuvant. L'adjuvant, étant prisonnier dans les grains de poudre thermoplastique, est intégralement retenu, sans ajout de liant ni de floculant, lors de la préparation du matériau ; la composition de ce dernier diffère donc de celle où les adjuvants retenus entourent les grains de résine thermoplastique.

Avantageusement, on forme la poudre de l'invention par broyage de granulés. Ceux-ci sont obtenus par extrusion du mélange de la résine et de l'adjuvant et mis sous forme de granulés lors du refroidissement ou après celui-ci, selon les conditions requises pour la granulation d'une résine donnée, bien connues de l'Homme de l'Art.

L'invention concerne aussi le matériau réalisé à partir d'une suspension aqueuse comportant, outre les fibres de renforcement, une poudre obtenue par broyage de granulés composés d'au moins une résine thermoplastique et d'au moins un adjuvant. Les fibres de renforcement utilisées dans la composition de l'invention, ont leur structure physique inchangée après transformation à chaud du matériau et sont prises dans le groupe suivant : fibres de verre, de carbone, de céramique, de bore, laine de verre, laine de roche, fibres métalliques, fibres synthétiques organiques à haut point de fusion (polyamides aromatiques, polyesters et autres). Dans un même matériau, on peut employer plusieurs types de fibres.

Préférentiellement, le matériau est une feuille réalisée à partir de fibres de verre.

La résine thermoplastique est prise dans le groupe suivant : polyoléfine (polyéthylène, polypropylène et copolymères); polychlorure de vinyle, polystyrène et copolymères, polyamide, polyester saturé, polyphénylène éther, polycarbonate et alliages plastiques.

L'adjuvant est pris dans le groupe suivant : antioxydant, noir de carbone, colorant, agent stabilisateur à la lumière, antistatique, ignifugeant, lubrifiant, agent de glissement, désactivateur de métaux et tout autre additif connu pour conférer au produit fini la propriété souhaitée.

Dans un mode de réalisation préférentiel, les fibres de renforcement sont des fibres de verre d'une longueur comprise entre 5 et 50 mm et d'un diamètre unitaire compris entre 10 et 20 micromètres. Leur concentration, en poids sec rapporté à celui dudit matériau, est comprise entre 15 et 60 %.

Dans une variante de l'invention, outre les fibres de renforcement ci-dessus, le matériau comporte des fibres d'acier inoxydable ou de verre aluminisé pour rendre le produit moulé conducteur, des fibres cellulosiques pour abaisser le coût de la composition dans la mesure où les exigences de moulabilité le permettent et si aucune des propriétés souhaitées pour l'application plastique ne s'en trouve affectée.

Préférentiellement, la poudre broyée est de diamètre moyen supérieur ou égal à 100 micromètres.

En dessous de cette limite, le broyage de la poudre devient difficile et il est nécessaire pour la retenir d'équiper la forme d'une toile d'un vide de maille si petit qu'ils s'oppose à l'élimination d'eau.

Dans une autre variante, les granulés renferment, outre résine et adjuvant, une charge minérale comme opacifiant ou renforcement partiel (talc, carbonate, mica, par excemple).

Bien entendu, les granulés peuvent comporter plusieurs résines, plusieurs adjuvants.

La suspension de fibres et poudre peut comporter, en outre, une pâte de polyoléfine, constituée de fibrilles de haute surface spécifique. On prévoit, enfin, que les fibres de renforcement peuvent subir un post-ensimage du type organosilane, organosilicone.

Le matériau de l'invention est destiné à être transformé par moulage, moulage-estampage ou thermoformage pour la production d'accessoires en industrie automobile, par exemple.

Les exemples suivants illustrent l'invention. Les quantités sont données en parties de poids. Chaque exemple comprend un essai réalisé selon le procédé traditionnel, et le même essai repris en appliquant l'enseignement de l'invention.

Exemple - COMPARATIF 1

Dans 10.000 parties d'eau contenant 0,04 pour cent d'un agent dispersant cationique à base d'acide gras, on disperse 40 parties de fils de base coupés 6 millimètres dont les fibres unitaires ont un diamètre de 10 micromètres (EC 10 160 5093 x 5 de VETROTEX), puis on ajoute 60 parties d'une poudre polypropylène (ELTEX® P de SOLVAY), dont la granulométrie est elle qu'il n'existe pas de particules de diamètre inférieur à 200 micromètres, 95 pour cent ayant entre 200 et 700 micromètres. On introduit ensuite 0,6 partie de noir de carbone, de granulométrie moyenne 27 micromètres et après dilution à 2 grammes par litre, le mélange est versé sous agitation d'air comprimé, au dessus de la toile métallique d'une forme à main de laboratoire. La toile a un vide de maille de 220 x 120 micromètres, et peut donc jouer le rôle de tamis vis-à-vis de la poudre polypropylène.

La feuille obtenue, où toutes les fibres de verre sont individualisées, est séchée, réchauffée à 240° C et moulée en une pièce plastique dont la couleur est gris clair, car la majeure partie du noir de carbone n'a pas été retenue dans la feuille.

Exemple 1 :

On répète le même essai à partir de poudre réalisée conformément à l'invention par broyage de granulés polypropylène homopolymère, contenant 1 pour cent de noir de carbone. Cette poudre broyée a 70 pour cent des particules d'un diamètre compris entre 250 et 500 micromètres, 5 pour cent ayant moins de 160 micromètres. La pièce plastique finale est d'un noir profond.

Exemple - COMPARATIF 2

Comme à l'exemple Comparatif 1, on prépare une suspension ayant 40 parties de fibres de verre en longueur 6 millimètres, et de diamètre 10 micromètres, 60 parties de poudre polypropylène et 0.5 partie d'un antioxydant AO (44' - Thiobis (6 tertiobutylmétacrésol) ). La feuille obtenue ne comporte pratiquement pas d'antioxydant, puisque densifiée à chaud sa résistance au vieillisement thermique est très faible : la perte de poids en étuve ventilée à 150° C est, pour une épaisseur de 500 micromètres, de 24 pour cent en 3 jours alors que sans antioxydant elle est de 20 pour cent.

Exemple 2 :

On réalise une feuille à partir de 40 parties des mêmes fibres de verre et de 60 parties d'une poudre polypropylène obtenue par broyage de granulés contenant 98 pour cent d'antioxydant AO : la tenue au vieillissement thermique est alors bonne puisque la perte de poids n'est que de 10 pour cent en treize jours.

**Revendications**

1 . Procédé humide de fabrication d'un matériau thermoplastique renforcé, destiné à être transformé par moulage, moulage-estampage ou thermoformage, et réalisé à partir de fibres de renforcement et d'au moins un résine thermoplastique, ce procédé comprenant les étapes de formation d'une suspension aqueuse contenant des fibres de renforcement, au moins une résine thermoplastique et au moins un adjuvant, puis d'essorage et séchage de la suspension sur la toile d'une forme, caractérisé en ce que la résine et l'adjuvant sont intimement mélangés dans les grains d'une poudre de granulométrie supérieure au vide de maille de la toile, ladite poudre étant introduite dans la suspension.

2 . Procédé selon la revendication 1, caractérisé en ce qu'on forme la poudre par broyage de granulés.

3 . Procédé selon la revendication 2, caractérisé en ce que les granulés sont obtenus par extrusion du mélange de la résine et de l'adjuvant.

4 . Procédé selon l'une quelconque des revendications 1 à 3, caractérisé en ce que le procédé humide est un procédé papetier mis en oeuvre sur une table plate.

5 . Matériau thermoplastique renforcé, réalisé à partir d'une suspension aqueuse et destiné à être transformée par moulage, moulage-estampage ou thermoformage, caractérisé en ce que ladite suspension comporte :
- des fibres de renforcement ;
- une poudre obtenue par broyage de granulés composés d'au moins une résine thermoplastique et d'au moins un adjuvant ;
- éventuellement des fibres supplémentaires ;
- éventuellement au moins une charge minérale ;
- éventuellement une pâte de polyoléfine.

6 . Matériau selon la revendication 5, caractérisé en ce que les fibres de renforcement sont des fibres constituées par des fibres de verre, d'une longueur comprise entre 5 et 50 mm et d'un diamètre unitaire compris entre 10 et 20 micromètres, et que leur concentration en poids sec rapporté à celui dudit matériau est compris entre 15 et 60 %.

7 . Matériau selon l'une quelconque des revendications 5 ou 6, caractérisé en ce que les fibres supplémentaires sont choisies parmi des fibres d'acier inoxydable, des fibres de verre aluminisé, des fibres cellulosiques et leurs mélanges.

8 . Matériau selon l'une quelconque des revendications 5 à 7, caractérisé en ce que ladite poudre est de diamètre moyen égal ou supérieur à 100 micromètres.

9 . Matériau selon l'une quelconque des revendications 5 à 8, caractérisé en ce que l'adjuvant est choisi parmi le noir de carbone, un agent antioxydant, un agent antistatique et leurs mélanges.

10 . Matériau selon l'une quelconque des revendications 5 à 9, caractérisé en ce que les fibres de renforcement ont subi un post-ensimage du type organosilane, organosilicone.